# EUROPEAN PATENT SPECIFICATION

(11) **EP 3 852 499 B1**
(45) Date of publication and mention of the grant of the patent: **08.01.2025**
(21) Application number: 20205495.3
(22) Date of filing: 03.11.2020
(51) Int. Cl.: H05B 47/11, H05B 47/105, B60Q 1/14

(54) **INTELLIGENT CAR LAMPLIGHT CONTROL DEVICE**
INTELLIGENTE FAHRZEUGLAMPENSTEUERVORRICHTUNG
DISPOSITIF DE COMMANDE DE LAMPE DE VÉHICULE INTELLIGENT

(30) Priority: 16.01.2020 CN 202010046225; 16.01.2020 CN 202020096646 U
(43) Date of publication of application: 21.07.2021
(73) Proprietor: Shenzhen Desheng Electronics Co., Ltd., Shenzhen 523726 (CN)
(72) Inventor: Zhao, Shu Ping, Shenzhen 523726 (CN)
(74) Representative: Hafner & Kohl PartmbB

(56) References cited:
- CN-A- 108 189 750
- US-A1- 2002 060 522
- US-A1- 2015 246 634
- US-B1- 10 486 586

## Description

### BACKGROUND OF THE INVENTION

### 1. Technical Field

The present invention relates to the technical field of intelligent control over cars, in particular to an intelligent car lamplight control device. The present invention also relates to the technical field of cars.

### 2. Description of Related Art

With the continuous development and progress of society, cars have become common vehicles in people's daily life. Existing car lamps are controlled manually. Many people may neglect the importance of using the lamps properly during driving. In a case where drivers forget changing a high beam to a low beam when meeting a car from the opposite direction at night or leaving from highways, violations will happen, and potential safety hazards will be caused, which is no good to ourselves and others.
US 2002/060522 A1 discloses a system for automatically controlling continuously variable headlamps on a controlled vehicle including an imaging system capable of determining lateral and elevational locations of headlamps from oncoming vehicles and tail lamps from leading vehicles.
US 10 486 586 B1 discloses vehicle headlamps that are controlled based on weather condition.
US 2015/246634 Al discloses an automatic vehicle exterior light control system including an optical sensor and a processor.
CN 108 189 750 A discloses a wireless light control system for the situation of two cars approaching each other at night.

### BRIEF SUMMARY OF THE INVENTION

The objective of the present invention is to overcome the above defects of the prior art by providing an intelligent car lamplight control device.

To fulfill the above-mentioned objective, the present invention provides an intelligent car lamplight control device, which comprises:
An ambient light intensity sensor configured to automatically monitor the light intensity outside a car;
A speed sensor configured to detect a driving speed of the car;
A main control MCU configured to acquire a light intensity signal transmitted from the ambient light intensity sensor and a speed signal transmitted from the speed sensor, wherein when determining, by analysis, that a light intensity value in the light intensity signal is less than a preset value or is changed to be small from being large and then alternately changed between a large value and a small value, the main control MCU is configured to transmit a car lamp on-off control command to a lamplight main-control system through a wireless transmitter to control the lamplight main-control system to turn on a car lamp; wherein when acquiring that a speed value in the speed signal is greater than a preset value, the main control MCU is configured to transmit a high/low beam switching control command to the lamplight main-control system through the wireless transmitter to control the lamplight main-control system to switch a low beam to a high beam; wherein when determining, by analysis, that the light intensity value is changed to be large from being small or is alternately changed between a large value and a small value and that an average driving speed is changed to be low from being high, the main control MCU is configured to transmit a high/low beam switching control command to the lamplight main-control system through the wireless transmitter to control the lamplight main-control system to switch the high beam to the low beam; and the intelligent car lamplight control device further comprises:
   The wireless transmitter configured to wirelessly transmit the control commands transmitted from the main control MCU to the lamplight main-control system; and
   The lamplight main-control system configured to receive the control commands transmitted from the wireless transmitter and to correspondingly control lamplight according to the control commands;
   Wherein, the main control MCU has an analog input terminal electrically connected to the ambient light intensity sensor as well as an 12C communication port electrically connected to the speed sensor, and the wireless transmitter is electrically connected to the main control MCU and is wirelessly connected to the lamplight main-control system.

Preferably, the ambient light intensity sensor includes a photosensitive diode configured to convert an induced light intensity into a voltage signal.

Preferably, the intelligent car lamplight control device further comprises a rain-fog detection sensor configured to automatically monitor a rain-fog state in an ambient environment and electrically connected to a digital input terminal of the main control MCU, wherein two parallel and spaced metal sheets are arranged on the rain-fog detection sensor; one said metal sheet is electrified, and the two metal sheets are configured to be conductive with each other to cause a voltage change in the rain-fog detection sensor when water is condensed between the two metal sheets; the rain-fog detection sensor is configured to transmit a rain-fog state signal to the main control MCU after detecting the voltage change; and the main control MCU is configured to transmit a lamplight color switching control command to the lamplight main-control system through the wireless transmitter to control the lamplight main-control system to switch white lamplight to yellow lamplight.

Preferably, the speed sensor includes a 3D acceleration sensor IC configured to detect a gradient of a road where the car drives; and when determining, by analysis, that a gradient value of the driving road in a gradient signal transmitted from the speed sensor is greater than a preset value, the main control MCU is configured to transmit an angle adjustment control command to the lamplight main-control system through the wireless transmitter to control the lamplight main-control system to adjust a lamplight irradiation angle.

Preferably, the wireless transmitter is configured to transmit data by means of a communication frequency band at a wireless common frequency of 315MHz-470MHz.

Preferably, the lamplight main-control system includes a left lamplight control system and a right lamplight control system which are in wireless transmission connection with the wireless transmitter.

Preferably, the left lamplight control system includes a left lamplight data processor, a left LED constant current source controller, and a left lamplight wireless receiver, wherein the left lamplight data processor is electrically connected to the left lamplight wireless receiver and the left LED constant current source controller, and the left lamplight wireless receiver is in wireless transmission connection with the wireless transmitter.

Preferably, the right lamplight control system includes a right lamplight data processor, a right LED constant current source controller, and a right lamplight wireless receiver, wherein the right lamplight data processor is electrically connected to the right lamplight wireless receiver and the right LED constant current source controller, and the right lamplight wireless receiver is in wireless transmission connection with the wireless transmitter.

Preferably, the main control MCU is configured to simulate a light intensity value of the car lamp by means of a digital-to-analog conversion circuit arranged in the main control MCU and compare the light intensity value with the light intensity value in the light intensity signal transmitted from the ambient light intensity sensor.

The invention fulfills intelligent control over a car lamp and can correctly use a high beam and a low beam to avoid violations or traffic accidents caused by improper use of the lamp, thus guaranteeing the safety and reliability.

Compared with the prior art, the present invention has the following beneficial effects:
1. The present invention can monitor the light intensity in the ambient environment of the car and the car speed in real time to correspondingly control the car lamp according to these state data, and can correctly use the high beam and the low beam to fulfill intelligent control over the car lamp, thus avoiding violations or traffic accidents caused by improper use of the lamp and guaranteeing the safety and reliability.
2. The present invention can change the color of the car lamp according to the rain-fog state, detected by the rain-fog detection sensor, in the ambient environment of the car and can change the irradiation angle of the car lamp according to the gradient, detected by the speed sensor, of the driving road, thus providing a safe driving condition for drivers and being practical.

Compared with the prior art, the disclosure has the following beneficial effects:
According to the disclosure, the rain-fog detection sensor circuit can detect ambient rain-fog states, the ambient light intensity sensor circuit can detect a light intensity in an ambient environment, the speed sensor circuit can detect a car speed and a road gradient, the wireless transmitting circuit can wirelessly transmit the data to the car lamp control module, and the yellow-white lamp PWM control circuit switches long-range lamplight and short-range lamplight or switches white lamplight and yellow lamplight to provide a safe driving condition for drivers.

### BRIEF DESCRIPTION OF THE SEVERAL VIEWS OF THE DRAWINGS

For the sake of a clearer explanation of the technical solutions of the embodiments of the present invention or the prior art, a brief description of the accompanying drawings required by the embodiments or the prior art is given below. Clearly, the drawings in the following description are used for illustrating certain embodiments of the present invention, and those ordinarily skilled in the art can acquire other drawings according to the following ones without creative labor.
FIG. 1 is a circuit diagram of an intelligent car lamplight control device in an embodiment of the present invention;
FIG. 2 is a schematic diagram of a rain-fog detection sensor of the intelligent car lamplight control device in the embodiment of the present invention;
FIG. 3 is an assembly diagram of a photosensitive diode of the intelligent car lamplight control device in the embodiment of the present invention.

### DETAILED DESCRIPTION OF THE INVENTION

To gain a better understanding of the objectives, technical solutions, and advantages of the invention, the technical solutions of the embodiments of the invention are clearly and completely described below in combination with the accompanying drawings. Clearly, the embodiments in the following description are only illustrative ones, and are not all possible ones of the invention. All other embodiments obtained by those of ordinary skill in the art based on the embodiments of the present invention without creative efforts shall fall within the protection scope of the present invention.

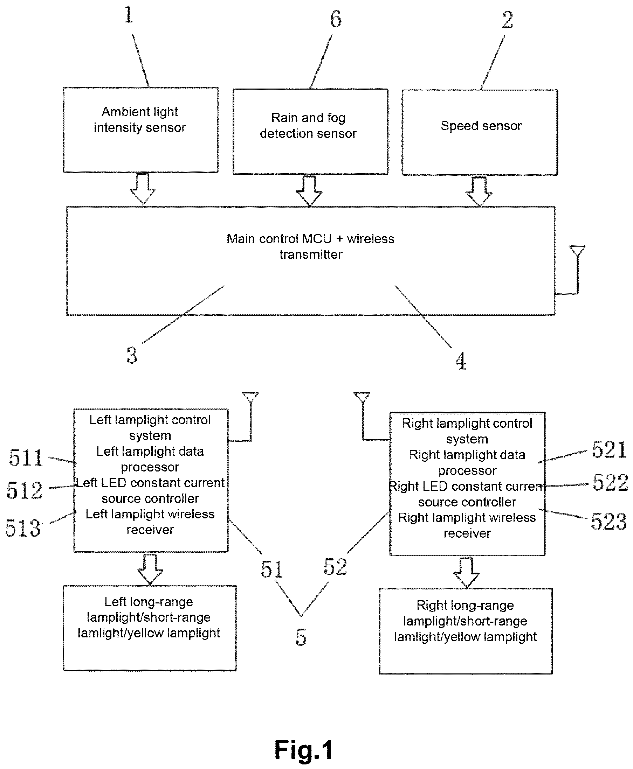

Referring to FIG. 1 to FIG. 3 , an embodiment of the present invention provides an intelligent car lamplight control device, which comprises an ambient light intensity sensor 1, a speed sensor 2, a main control MCU3, a wireless transmitter 4, a lamplight main-control system 5, and the like. All components of this embodiment are expounded below in conjunction with the accompanying drawings.

The ambient light intensity sensor 1 is used to automatically monitor the light intensity outside a car.

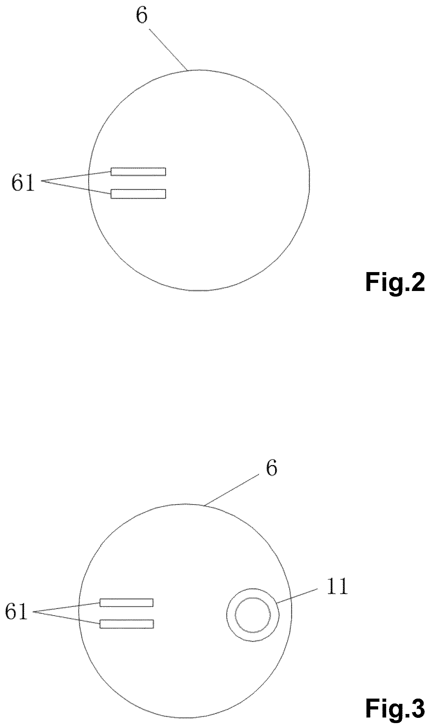

As shown in FIG. 3 , the ambient light intensity sensor 1 includes a photosensitive diode 11 capable of converting an induced light intensity into a voltage signal.

The speed sensor 2 is used to detect a driving speed of the car.

Preferably, the speed sensor 2 includes a 3D acceleration sensor IC capable of detecting the driving speed of the car and the gradient of a driving road ; and when determining, by analysis, that a gradient value of the driving road in a gradient signal transmitted from the speed sensor 2 is greater than 15°, the main control MCU3 transmits an angle adjustment control command to the lamplight main-control system 5 through the wireless transmitter 4 to control the lamplight main-control system 5 to adjust a lamplight irradiation angle. Of course, in other embodiments, a reference value of the gradient of the driving road can be changed by users as actually needed, without being limited to this embodiment.

The main control MCU3 is used to acquire a light intensity signal transmitted from the ambient light intensity sensor 1 and speed and gradient signals transmitted from the speed sensor 2, and has an analog input terminal electrically connected to the ambient light intensity sensor 1 as well as an 12C communication port electrically connected to the speed sensor 2.

Wherein, during operation, the main control MCU3 is able to simulate a light intensity value of a car lamp by means of a digital-to-analog conversion circuit arranged in the main control MCU3 and compare the light intensity value with a light intensity value in the light intensity signal transmitted from the ambient light intensity sensor 1, thus preventing the intelligent car lamplight control device from misjudging the lamplight of the car as the ambient light when the lamplight emitted by the car lamp is reflected by a wall, which may otherwise affect normal operation of the control device.

The wireless transmitter 4 is used to wirelessly transmit control commands transmitted from the main control MCU3 to the lamplight main-control system 5, has an input terminal electrically connected to the main control MCU3, and is wirelessly connected to the lamplight main-control system 5.

The lamplight main-control system 5 is used to receive the control commands transmitted from the wireless transmitter 4 and to correspondingly control lamplight according to the control commands.

As shown in FIG. 1 , the lamplight main-control system 5 includes a left lamplight control system 51 and a right lamplight control system 52, wherein the left lamplight control system 51 includes a left lamplight data processor 511, a left LED constant current source controller 512, and a left lamplight wireless receiver 513; the left lamplight data processor 511 is electrically connected to the left lamplight wireless receiver 513 and the left LED constant current source controller 512, and the left lamplight wireless receiver 513 is in wireless transmission connection with the wireless transmitter 4; the right lamplight control system 52 includes a right lamplight data processor 521, a right LED constant current source controller 522, and a right lamplight wireless receiver 523; and the right lamplight data processor 521 is electrically connected to the right lamplight wireless receiver 523 and the right LED constant current source controller 522, and the right lamplight wireless receiver 523 is in wireless transmission connection with the wireless transmitter 4.

When the car is driven at a place where light is insufficient, the ambient light intensity sensor 1 converts the light intensity induced by the ambient light intensity sensor 1 into the voltage signal; the main control MCU3 receives the voltage signal and converts the voltage signal into a digital signal (value), and then compares the digital signal with a light reference value preset by the users, and in this case, the digital signal is smaller than the light reference value; and afterwards, the main control MCU3 will transmit a control command to the lamplight main-control system 5 to control the lamplight main-control system 5 to turn on the car lamp.

When the car enters a tunnel, ambient light of the car is changed to be dim from being bright. After the car enters the tunnel in which street lamps are spaced apart from one another, the ambient light of the car is alternately changed between bright light and dim light; the ambient light intensity sensor 1 will induce a change law of the light intensity in this process and transmit the change law to the main control MCU3 in the form of a voltage signal; after receiving and analyzing the voltage signal of the change law, the main control MCU3 transmits a control command to the lamplight main-control system 5 to control the lamplight main-control system 5 to turn on the car lamp.

When being driven on a highway at a high speed at night, the speed sensor 2 detects speed data of the car, then the main control MCU3 reads the speed data and compares the speed data with a speed reference value present by the users, and in this case, the value of the speed data will be greater than the speed reference value; and afterwards, the main control MCU3 transmits a control command to the lamplight main-control system 5 to control the lamplight main-control system 5 to turn on a high beam.

When passing by other cars at night, the ambient light intensity will gradually become low, the main control MCU3 receives a light intensity change signal transmitted from the ambient light intensity sensor 1 and then transmits a control command to the lamplight main-control system 5 through the wireless transmitter 4 to control the lamplight main-control system 5 to switch the high beam to a low beam.

When the car is driven on an urban road after leaving from the highway, because street lamps on the highway and the urban road are spaced, the light intensity on the highway and the urban road is alternately changed between a high intensity and a low intensity; in this case, the main control MCU3 determines, by analysis, that the light intensity value in the light intensity signal transmitted from the ambient light intensity sensor 1 changes between a large value and a small value and that an average speed value transmitted from the speed sensor 2 is changed to be small from being large; and then, the main control MCU3 transmits a control command to the lamplight main-control system 5 through the wireless transmitter 4 to control the lamplight main-control system 5 to switch the high beam to the low beam.

In a specific embodiment, the intelligent car lamplight control device further comprises a rain-fog detection sensor 6 used to automatically monitor the rain-fog state in an ambient environment and electrically connected to a digital input terminal of the main control MCU3, wherein two parallel and spaced metal sheets 61 are arranged on the rain-fog detection sensor 6; one metal sheet 61 is electrified, and when water is condensed between the two metal sheets 61, the two metal sheets 61 will be conductive with each other to cause a voltage change in the rain-fog detection sensor 6; the rain-fog detection sensor 6 can transmit a rain-fog state signal to the main control MCU3 after detecting the voltage change; and the main control MCU3 transmits a lamplight color switching control command to the lamplight main-control system 5 through the wireless transmitter 4 to control the lamplight main-control system 5 to switch white lamplight to yellow lamplight (turn on a fog lamp). Wherein, to make sure that the water can be condensed on the two metal sheets 61 and will not be blow away during driving, the two metal sheets 61 may be perpendicular to the driving direction of the car.

It should be noted that the intelligent car lamplight control device in the above embodiments of the present invention is only exemplified by dividing above function modules. In actual application, the above functions can be achieved by different function modules as required, that is, the internal structure of the system is divided into different function modules to achieve all or part of the functions described above.

In summary, the intelligent car lamplight control device can monitor the light intensity in the ambient environment of the car and the car speed in real time to correspondingly control the car lamp according to these state data, and can correctly use the high beam and the low beam to fulfill intelligent control over the car lamp, thus avoiding violations or traffic accidents caused by improper use of the lamp, and guaranteeing the safety and reliability.

The operating principle of rain-fog direction and control is as follows:
When water is condensed on the two metal sheets, the voltage is transmitted from one metal sheet to the other metal sheet by means of the electrical conductivity of the water; when detecting the voltage, the rain-fog detection sensor circuit 71 transmits a signal to the MCU of the data processing circuit 75 for processing and then transmits the rain-fog state to the car lamp control module 8 every 20 seconds through the wireless transmitting circuit 74 by means of wireless encoding; and the yellow-white lamp PWM control circuit 81 switches white lamplight to yellow lamplight with higher power to penetrate through rain and fog.

5 minutes after the voltage in the metal sheet disappears, the MCU of the data processing circuit 75 transmits the rain-fog state to the car lamp control module 8 through the wireless transmitting circuit, and the yellow-white lamp PWM control circuit 81 switches the yellow lamplight to the white lamplight to increase an irradiation distance.

The principle of the rain-fog direction lies in that the rain-fog state is captured by means of the electrical conductivity of the water. The metal sheets are parallel, and are perpendicular to a driving direction to make sure that the condensate water on the metal sheets will not be blow away immediately during driving, which may otherwise cause a misjudgment.

The rain and fog are determined by means of the electrical conductivity of the water, water condensation is guaranteed by the structural design of the parallel metal sheets, the rain-fog state and a sunny state are determined according to the on-off state of the metal sheets, and the color temperature of the lamplight is steplessly adjusted to 6500K from 2800K according to the rain-fog state.

The operating principle of light intensity detection and control is as follows:
The circuit provides a forward voltage for the photosensitive diode; when the light changes, the light intensity induced by the photosensitive diode is converted into the variable voltage signal input to an AD input port of the MCU of the data processing circuit 75 and then converted into a digital signal by the MCU, the MCU analyzes the state of ambient light through the acquired voltage signal and then transmits the state to the car lamp control module after encoding the state to be processed.

An ambient light processing method is as follows: the MCU determines the light state of an ambient environment during driving by means of data statistics and intelligent operations according to the signal acquired by the photosensitive diode.

For example, (1) after a car enters a tunnel in the daytime, bright light is changed to dim light; when lamplight irradiates in the tunnel, an alternate change between the bright light and the dim light is generated, so that the light state of an ambient environment can be determined according to change data; when the car enters the tunnel or light in the evening is lower than a certain value, the MCU provides data for the car lamp control module, and the car lamp control module controls a lamp control system to automatically turn on a lamp. (2) Light of spaced street lamps on a highway or an urban road is alternately changed between bright light and dim light, the MCU determines the light state of an ambient environment in cooperation with a speed sensor; after the car leaves from the highway, the ambient light intensity sensor circuit transmits a signal to the car lamp control module when detecting a street lamp, and the car lamp control module automatically switches a high beam to a lower beam. (3) A high beam is changed to be bright from being dim when an oncoming car appears; when detecting the oncoming car, the MCU transmits a data signal to the car lamp control module, and the car lamp control module changes the lamplight to the low beam to reduce the influence of long-range lamplight on drivers in passing-by cars, so that safe driving is achieved, and no influence will be caused to other car drivers.

Whether light, reflected by an ambient wall, of the car is reflected light or ambient light is distinguished through circuit cooperation to reduce misjudgements. Lamps of the car are controlled by a 5KHz PWM; and when the reflected light is transmitted to the photosensitive diode, the circuit can restore a signal of the 5KHz PWM to determine whether the reflected light is lamplight of the car or the ambient light.

The operating principle of speed detection and control is as follows:
The 3D acceleration sensor chip is used, the MCU of the data processing circuit 75 reads data from the 3D acceleration sensor chip via the 12C communication port thereof. The MCU works out the speed of car during driving, the speed of the car in a static state, or a road gradient by means of the data.

A driving speed or driving state is a necessary condition for turning on a car lamp. For example, when the car runs at a high speed over 60, a 3D acceleration sensor sends information to the car lamp control module, the yellow-white lamp PWM control circuit automatically switches the low beam to the high beam to increase a visual range to guarantee safe driving. In addition, in other embodiments, when the road gradient is greater than 15°, the yellow-white lamp PWM control circuit automatically adjusts a lamplight irradiation angle to make the road condition clear.

## Claims

1. An intelligent car lamplight control device, comprising:
an ambient light intensity sensor (1) configured to automatically monitor a light intensity outside a car;
a speed sensor (2) configured to detect a driving speed of the car;
a main control MCU (3) configured to acquire a light intensity signal transmitted from the ambient light intensity sensor and a speed signal transmitted from the speed sensor, wherein when determining, by analysis, that a light intensity value in the light intensity signal is less than a preset value or is changed to be small from being large and then alternately changed between a large value and a small value, the main control MCU (3) is configured to transmit a car lamp on-off control command to a lamplight main-control system (5) through a wireless transmitter (4) to control the lamplight main-control system (5) to turn on a car lamp; wherein when acquiring that a speed value in the speed signal is greater than a preset value, the main control MCU (3) is configured to transmit a high/low beam switching control command to the lamplight main-control system (5) through the wireless transmitter (4) to control the lamplight main-control system (5) to switch a low beam to a high beam;
**characterized in that**,
when determining, by analysis, that the light intensity value is changed to be large from being small or is alternately changed between a large value and a small value and that an average driving speed is changed to be low from being high, the main control MCU (3) is configured to transmit a high/low beam switching control command to the lamplight main-control system (5) through the wireless transmitter (4) to control the lamplight main-control system (5) to switch the high beam to the low beam; and
the intelligent car lamplight control device further comprises:
the wireless transmitter (4) configured to wirelessly transmit the control commands transmitted from the main control MCU (3) to the lamplight main-control system (5); and
the lamplight main-control system (5) configured to receive the control commands transmitted from the wireless transmitter (4) and to correspondingly control lamplight according to the control commands;
wherein the main control MCU (3) has an analog input terminal electrically connected to the ambient light intensity sensor (1) as well as an 12C communication port electrically connected to the speed sensor (2), and the wireless transmitter (4) is electrically connected to the main control MCU (3) and is wirelessly connected to the lamplight main-control system (5).

2. The intelligent car lamplight control device according to Claim 1, wherein the ambient light intensity sensor (1) includes a photosensitive diode (11) configured to convert an induced light intensity into a voltage signal.

3. The intelligent car lamplight control device according to Claim 1, further comprising a rain-fog detection sensor (6) configured to automatically monitor a rain-fog state in an ambient environment and electrically connected to a digital input terminal of the main control MCU (3), wherein two parallel and spaced metal sheets (61) are arranged on the rain-fog detection sensor (6); one said metal sheet is electrified, and the two metal sheets are configured to be conductive with each other to cause a voltage change in the rain-fog detection sensor (6) when water is condensed between the two metal sheets; the rain-fog detection sensor (6) is configured to transmit a rain-fog state signal to the main control MCU (3) after detecting the voltage change; and the main control MCU (3) is configured to transmit a lamplight color switching control command to the lamplight main-control system (5) through the wireless transmitter (4) to control the lamplight main-control system (5) to switch white lamplight to yellow lamplight.

4. The intelligent car lamplight control device according to Claim 1, wherein the speed sensor (2) includes a 3D acceleration sensor IC configured to detect a gradient of a road where the car drives, and when determining, by analysis, that a gradient value of the driving road in a gradient signal transmitted from the speed sensor (2) is greater than a preset value, the main control MCU (3) is configured to transmit an angle adjustment control command to the lamplight main-control system (5) through the wireless transmitter (4) to control the lamplight main-control system (5) to adjust a lamplight irradiation angle.

5. The intelligent car lamplight control device according to Claim 1, wherein the wireless transmitter (4) is configured to transmit data by means of a communication frequency band at a wireless common frequency of 315MHz-470MHz.

6. The intelligent car lamplight control device according to Claim 1, wherein the lamplight main-control system (5) includes a left lamplight control system (51) and a right lamplight control system (52) which are in wireless transmission connection with the wireless transmitter (4).

7. The intelligent car lamplight control device according to Claim 6, wherein the left lamplight control system (51) includes a left lamplight data processor (511), a left LED constant current source controller (512), and a left lamplight wireless receiver (513), wherein the left lamplight data processor (511) is electrically connected to the left lamplight wireless receiver (513) and the left LED constant current source controller (512), and the left lamplight wireless receiver (513) is in wireless transmission connection with the wireless transmitter (4).

8. The intelligent car lamplight control device according to Claim 6, wherein the right lamplight control system (52) includes a right lamplight data processor (521), a right LED constant current source controller (522), and a right lamplight wireless receiver (523), wherein the right lamplight data processor (521) is electrically connected to the right lamplight wireless receiver (523) and the right LED constant current source controller (522), and the right lamplight wireless receiver (523) is in wireless transmission connection with the wireless transmitter (4).

9. The intelligent car lamplight control device according to Claim 1, wherein the main control MCU (3) is configured to simulate a light intensity value of the car lamp by means of a digital-to-analog conversion circuit arranged in the main control MCU and compare the light intensity value with the light intensity value in the light intensity signal transmitted from the ambient light intensity sensor (1).

## Patentansprüche

1. Intelligente Fahrzeug-Lampenlicht-Steuervorrichtung, umfassend:
einen Umgebungslicht-Intensitätssensor (1), der so konfiguriert ist, dass er automatisch eine Lichtintensität außerhalb eines Fahrzeugs überwacht;
einen Geschwindigkeitssensor (2), der so konfiguriert ist, dass er eine Fahrgeschwindigkeit des Fahrzeugs erfasst;
eine Hauptsteuereinheit MCU (3), die so konfiguriert ist, dass sie ein vom Umgebungslicht-Intensitätssensor übertragenes Lichtintensitätssignal und ein vom Geschwindigkeitssensor übertragenes Geschwindigkeitssignal erfasst,
wobei die Hauptsteuereinheit MCU (3) so konfiguriert ist, dass, wenn durch Analyse festgestellt wird, dass ein Lichtintensitätswert im Lichtintensitätssignal kleiner als ein voreingestellter Wert ist oder von einem großen Wert zu einem kleinen Wert geändert wird und dann abwechselnd zwischen einem großen Wert und einem kleinen Wert wechselt, sie über einen drahtlosen Sender (4) einen Fahrzeuglampen-An-Aus-Steuerbefehl an ein Lampenlicht-Hauptsteuersystem (5) sendet, um so das Lampenlicht-Hauptsteuersystems (5) anzuweisen, eine Fahrzeuglampe anzuschalten;
wobei die Hauptsteuereinheit MCU (3) so konfiguriert ist, dass, wenn erfasst wird, dass ein Geschwindigkeitswert im Geschwindigkeitssignal größer als ein voreingestellter Wert ist, sie über den drahtlosen Sender (4) einen Fernlicht/Abblendlicht-Umschaltsteuerbefehl an das Lampenlicht-Hauptsteuersystem (5) sendet, um so das Lampenlicht-Hauptsteuersystem (5) anzuweisen, ein Abblendlicht auf ein Fernlicht umzuschalten;
**dadurch gekennzeichnet, dass** die Hauptsteuereinheit MCU (3) so konfiguriert ist, dass, wenn durch Analyse festgestellt wird, dass sich der Lichtintensitätswert von klein zu groß ändert oder sich abwechselnd zwischen einem großen Wert und einem kleinen Wert ändert und dass eine durchschnittliche Fahrgeschwindigkeit von hoch zu niedrig geändert wird, sie über den drahtlosen Sender (4) einen Fernlicht/Abblendlicht-Umschaltsteuerbefehl an das Lampenlicht-Hauptsteuersystem (5) sendet, um so das Lampenlicht-Hauptsteuersystem (5) anzuweisen, das Fernlicht auf das Abblendlicht umzuschalten; und
wobei die intelligente Fahrzeug-Lampenlicht-Steuervorrichtung ferner umfasst:
den drahtlosen Sender (4), der so konfiguriert ist, dass er die von der Hauptsteuereinheit MCU (3) gesendeten Steuerbefehle drahtlos an das Lampenlicht-Hauptsteuersystem (5) überträgt; und
das Lampenlicht-Hauptsteuersystem (5), das so konfiguriert ist, dass es die vom drahtlosen Sender (4) übertragenen Steuerbefehle empfängt und das Lampenlicht entsprechend den Steuerbefehlen steuert;
wobei die Hauptsteuereinheit MCU (3) einen analogen Eingangsanschluss, der elektrisch mit dem Umgebungslicht-Intensitätssensor (1) verbunden ist, sowie einen 12C-Kommunikationsanschluss aufweist, der elektrisch mit dem Geschwindigkeitssensor (2) verbunden ist, und der drahtlose Sender (4) elektrisch mit der Hauptsteuereinheit MCU (3) verbunden ist und drahtlos mit dem Lampenlicht-Hauptsteuersystem (5) verbunden ist.

2. Intelligente Fahrzeug-Lampenlicht-Steuervorrichtung nach Anspruch 1, wobei der Umgebungslicht-Intensitätssensor (1) eine lichtempfindliche Diode (11) umfasst, die so konfiguriert ist, dass sie eine induzierte Lichtintensität in ein Spannungssignal umwandelt.

3. Intelligente Fahrzeug-Lampenlicht-Steuervorrichtung nach Anspruch 1, die ferner einen Regen-Nebel-Erkennungssensor (6) umfasst, der so konfiguriert ist, dass er einen Regen-Nebel-Zustand in einer Umgebung automatisch überwacht, und der elektrisch mit einem digitalen Eingangsanschluss der Hauptsteuereinheit MCU (3) verbunden ist, wobei zwei parallele und beabstandete Metallbleche (61) auf dem Regen-Nebel-Erkennungssensor (6) angeordnet sind; wobei eine der Metallplatten elektrifiziert ist und die beiden Metallplatten so konfiguriert sind, dass sie miteinander leitend sind, um eine Spannungsänderung im Regen-Nebel-Erkennungssensor (6) zu verursachen, wenn Wasser zwischen den beiden Metallplatten kondensiert; wobei der Regen-Nebel-Erkennungssensor (6) so konfiguriert ist, dass er ein Regen-Nebel-Zustandssignal an die Hauptsteuereinheit MCU (3) zu überträgt, nachdem die Spannungsänderung erfasst wurde; und wobei die Hauptsteuereinheit MCU (3) so konfiguriert ist, dass sie einen Befehl zum Umschalten der Lampenfarbe über den drahtlosen Sender (4) an das Lampenlicht-Hauptsteuersystem (5) sendet, um das Lampenlicht-Hauptsteuersystem (5) so zu steuern, dass es von weißem Lampenlicht auf gelbes Lampenlicht umschaltet.

4. Intelligente Fahrzeug-Lampenlicht-Steuervorrichtung nach Anspruch 1, wobei der Geschwindigkeitssensor (2) einen 3D-Beschleunigungssensor IC enthält, der so konfiguriert ist, dass er ein Gefälle einer Straße, auf der das Auto fährt, erkennt, und bei der Bestimmung durch Analyse, dass ein Gefällewert der befahrenen Straße in einem vom Geschwindigkeitssensor (2) übertragenen Gefällesignal größer als ein voreingestellter Wert ist, die Hauptsteuereinheit MCU (3) so konfiguriert ist, dass sie einen Befehl zur Winkeleinstellung über den drahtlosen Sender (4) an das Lampenlicht-Hauptsteuersystem (5) sendet, um das Lampenlicht-Hauptsteuersystem (5) so zu steuern, dass es den Abstrahlwinkel der Fahrzeugbeleuchtung einstellt.

5. Intelligente Fahrzeug-Lampenlicht-Steuervorrichtung nach Anspruch 1, wobei der drahtlose Sender (4) so konfiguriert ist, dass er Daten mittels eines Kommunikationsfrequenzbandes bei einer gemeinsamen drahtlosen Frequenz von 315 MHz bis 470 MHz überträgt.

6. Intelligente Fahrzeug-Lampenlicht-Steuervorrichtung nach Anspruch 1, wobei das Lampenlicht-Hauptsteuersystem (5) ein linkes Lampenlicht-Steuersystem (51) und ein rechtes Lampenlicht-Steuersystem (52) umfasst, die in drahtloser Übertragungsverbindung mit dem drahtlosen Sender (4) stehen.

7. Intelligente Fahrzeug-Lampenlicht-Steuervorrichtung nach Anspruch 6, wobei das linke Lampenlicht-Steuersystem (51) einen linken Lampenlicht-Datenprozessor (511), einen linken LED-Konstantstromquellen-Controller (512) und einen linken Lampenlicht-Drahtlosempfänger (513) umfasst, wobei der linke Lampenlicht-Datenprozessor (511) elektrisch mit dem linken Lampenlicht-Drahtlosempfänger (513) und dem linken LED-Konstantstromquellen-Controller (512) verbunden ist und der linke Lampenlicht-Drahtlosempfänger (513) in drahtloser Übertragungsverbindung mit dem drahtlosen Sender (4) steht.

8. Intelligente Fahrzeug-Lampenlicht-Steuervorrichtung nach Anspruch 6, wobei das rechte Lampenlicht-Steuerungssystem (52) einen rechten Lampenlicht-Datenprozessor (521), einen rechten LED-Konstantstromquellen-Controller (522) und einen rechten Lampenlicht-Drahtlosempfänger (523) umfasst, wobei der rechte Lampenlicht-Datenprozessor (521) elektrisch mit dem rechten Lampenlicht-Drahtlosempfänger (523) und dem rechten LED-Konstantstromquellen-Controller (522) verbunden ist und der rechte Lampenlicht-Drahtlosempfänger (523) in drahtloser Übertragungsverbindung mit dem drahtlosen Sender (4) steht.

9. Intelligente Fahrzeug-Lampenlicht-Steuervorrichtung nach Anspruch 1, wobei die Hauptsteuereinheit MCU (3) so konfiguriert ist, dass sie einen Lichtintensitätswert der Fahrzeuglampe mittels einer in der Hauptsteuereinheit MCU angeordneten Digital-Analog-Wandlerschaltung simuliert und den Lichtintensitätswert mit dem Lichtintensitätswert in dem vom Umgebungslicht-Intensitätssensor (1) übertragenen Lichtintensitätssignal vergleicht.

## Revendications

1. Dispositif de commande intelligente de l'éclairage d'un véhicule, comprenant:
un capteur d'intensité de lumière ambiante (1) configuré pour surveiller automatiquement une intensité lumineuse à l'extérieur d'un véhicule;
un capteur de vitesse (2) configuré pour détecter une vitesse de déplacement du véhicule;
une unité de commande principale MCU (3) configurée pour détecter un signal d'intensité lumineuse transmis par le capteur d'intensité de lumière ambiante et un signal de vitesse transmis par le capteur de vitesse,
dans lequel l'unité de commande principale MCU (3) est configurée de telle sorte que, lorsqu'il est déterminé par analyse qu'une valeur d'intensité lumineuse dans le signal d'intensité lumineuse est inférieure à une valeur prédéfinie ou passe d'une grande valeur à une petite valeur, puis alterne entre une grande valeur et une petite valeur, elle envoie une instruction de commande d'allumage/extinction de lampe de véhicule à un système de commande principal de lampe (5) par l'intermédiaire d'un émetteur sans fil (4), de manière à ordonner au système de commande principal de lampe (5) d'allumer une lampe de véhicule;
dans lequel l'unité de commande principale MCU (3) est configurée de telle sorte que, lorsqu'il est détecté qu'une valeur de vitesse dans le signal de vitesse est supérieure à une valeur préétablie, elle envoie une instruction de commande de commutation de feux de route/feux de croisement au système de commande principal de feux de lampe (5) par l'intermédiaire de l'émetteur sans fil (4), de manière à ordonner au système de commande principal de feux de lampe (5) de commuter un feu de croisement en un feu de route;
**caractérisé en ce que** l'unité de commande principale MCU (3) est configurée de telle sorte que, lorsqu'il est déterminé par analyse que la valeur d'intensité lumineuse passe de petite à grande ou passe alternativement d'une grande valeur à une petite valeur et qu'une vitesse de conduite moyenne passe de haute à basse, il envoie, par l'intermédiaire de l'émetteur sans fil (4), une commande de commutation feux de route/feux de croisement au système de commande principal de feux de lampes (5), de manière à ordonner au système de commande principal de feux de lampes (5) de commuter les feux de route en feux de croisement; et
dans lequel le dispositif intelligent de commande des phares du véhicule comprend en outre :
l'émetteur sans fil (4) configuré pour transmettre sans fil les instructions de commande envoyées par l'unité de commande principale MCU (3) au système de commande principal des phares (5); et
le système de commande principal de la lumière de la lampe (5) configuré pour recevoir les commandes de commande transmises par l'émetteur sans fil (4) et pour commander la lumière de la lampe conformément aux commandes de commande;
dans lequel l'unité de commande principale MCU (3) comprend un port d'entrée analogique connecté électriquement au capteur d'intensité de lumière ambiante (1) et un port de communication 12C connecté électriquement au capteur de vitesse (2), et l'émetteur sans fil (4) est connecté électriquement à l'unité de commande principale MCU (3) et est connecté sans fil au système de commande principal d'éclairage de lampe (5).

2. Dispositif de commande intelligente de l'éclairage d'un véhicule selon la revendication 1, dans lequel le capteur d'intensité de lumière ambiante (1) comprend une diode photosensible (11) configurée pour convertir une intensité lumineuse induite en un signal de tension.

3. Dispositif de commande intelligente de l'éclairage d'un véhicule selon la revendication 1, comprenant en outre un capteur de détection de pluie-brouillard (6) configuré pour surveiller automatiquement une condition de pluie-brouillard dans un environnement, et connecté électriquement à un port d'entrée numérique de l'unité de commande principale MCU (3), dans lequel deux plaques métalliques parallèles et espacées (61) sont disposées sur le capteur de détection de pluie-brouillard (6); dans lequel l'une des plaques métalliques est électrifiée et les deux plaques métalliques sont configurées pour être conductrices l'une avec l'autre afin de provoquer un changement de tension dans le capteur de détection de pluie-brouillard (6) lorsque l'eau se condense entre les deux plaques métalliques; dans lequel le capteur de détection de brouillard de pluie (6) est configuré pour transmettre un signal d'état de brouillard de pluie à l'unité de commande principale MCU (3) après que le changement de tension a été détecté; et dans lequel l'unité de commande principale MCU (3) est configurée pour envoyer une commande de changement de couleur de lampe au système de commande principal d'éclairage de lampe (5) par l'intermédiaire de l'émetteur sans fil (4) afin de commander le système de commande principal d'éclairage de lampe (5) pour passer d'un éclairage de lampe blanc à un éclairage de lampe jaune.

4. Dispositif de commande intelligente de l'éclairage d'un véhicule selon la revendication 1, dans lequel le capteur de vitesse (2) comprend un capteur d'accélération 3D IC configuré pour détecter une pente d'une route sur laquelle la voiture se déplace et, lors de la détermination par analyse, qu'une valeur de pente de la route empruntée dans un signal de pente transmis par le capteur de vitesse (2) est supérieure à une valeur prédéfinie, l'unité de commande principale MCU (3) est configurée pour envoyer une commande de réglage d'angle au système de commande principal d'éclairage de lampe (5) par l'intermédiaire de l'émetteur sans fil (4) afin de commander le système de commande principal d'éclairage de lampe (5) pour régler l'angle de rayonnement de l'éclairage du véhicule.

5. Dispositif de commande intelligente de l'éclairage d'un véhicule selon la revendication 1, dans lequel l'émetteur sans fil (4) est configuré pour transmettre des données au moyen d'une bande de fréquences de communication à une fréquence sans fil commune de 315 MHz à 470 MHz.

6. Dispositif de commande intelligente de l'éclairage d'un véhicule selon la revendication 1, dans lequel le système de commande principal d'éclairage de lampe (5) comprend un système de commande d'éclairage de lampe gauche (51) et un système de commande d'éclairage de lampe droit (52) qui sont en communication de transmission sans fil avec l'émetteur sans fil (4).

7. Dispositif de commande intelligente de l'éclairage d'un véhicule selon la revendication 6, dans lequel le système de commande d'éclairage de lampe gauche (51) comprend un processeur de données d'éclairage de lampe gauche (511), un contrôleur de source de courant constant LED gauche (512) et un récepteur sans fil d'éclairage de lampe gauche (513), dans lequel le processeur de données de lumière de lampe gauche (511) est connecté électriquement au récepteur sans fil de lumière de lampe gauche (513) et au contrôleur de source de courant constant LED gauche (512), et le récepteur sans fil de lumière de lampe gauche (513) est en communication de transmission sans fil avec l'émetteur sans fil (4).

8. Dispositif de commande intelligente de l'éclairage d'un véhicule selon la revendication 6, dans lequel le système de commande d'éclairage de lampe droit (52) comprend un processeur de données d'éclairage de lampe droit (521), un contrôleur de source de courant constant LED droit (522) et un récepteur sans fil d'éclairage de lampe droit (523), dans lequel le processeur de données d'éclairage de lampe droit (521) est connecté électriquement au récepteur sans fil d'éclairage de lampe droit (523) et au contrôleur de source de courant constant LED droit (522), et le récepteur sans fil d'éclairage de lampe droit (523) est en communication de transmission sans fil avec l'émetteur sans fil (4).

9. Dispositif de commande intelligente de l'éclairage d'un véhicule selon la revendication 1, dans lequel l'unité de commande principale MCU (3) est configurée pour simuler une valeur d'intensité lumineuse de la lampe de véhicule au moyen d'un circuit de conversion numérique-analogique disposé dans l'unité de commande principale MCU et pour comparer la valeur d'intensité lumineuse à la valeur d'intensité lumineuse dans le signal d'intensité lumineuse transmis par le capteur d'intensité de lumière ambiante (1).
